**Europäisches Patentamt**

**European Patent Office**

**Office européen des brevets**

(11) Veröffentlichungsnummer: **0 251 269**
**A2**

(12) **EUROPÄISCHE PATENTANMELDUNG**

(21) Anmeldenummer: 87109305.0

(22) Anmeldetag: 29.06.87

(51) Int. Cl.4: **F23B 1/14** , **F23L 15/00** ,
**F23L 3/00** , **F23M 11/02**

(30) Priorität: 30.06.86 CH 2627/86

(43) Veröffentlichungstag der Anmeldung:
07.01.88 Patentblatt 88/01

(84) Benannte Vertragsstaaten:
AT BE CH DE FR GB IT LI LU NL SE

(71) Anmelder: **Grindi AG**
**Kirchgasse 5**
**CH-9500 Wil 2(CH)**

(72) Erfinder: **Bösch, Otto**
**Wies**
**CH-9651 Stein(CH)**

(74) Vertreter: **Klunker . Schmitt-Nilson . Hirsch**
**Winzererstrasse 106**
**D-8000 München 40(DE)**

(54) **Verfahren und Ofen zur Vergasung fester Brennstoffe und zur Verbrennung der gewonnenen Gase.**

(57) Ein Verfahren zur Vergasung fester Brennstoffe wie Holz, Spanplatten, Sägemehl, Kohle, Briketts, Haushaltsabfälle usw. und zur anschliessenden Verbrennung der gewonnenen Gase, bei dem ein Ofen (0) als der Gaserzeuger zur Verwendung gelangt, der einen bewegbaren Feuerrost (5), am Einfüllschacht (10) seiner Brennkammer (1) eine Zuführöffnung (2) für den Brennstoff, ferner weitere Eintrittsöffnungen (17,19) mindestens für die zum Vergasungsvorgang benötigte Primärluft mit zugeordneten Förder-und/oder Dosiervorrichtungen (22,23) für die Luftzufuhr aufweist, und an die Brennkammer (1) des Ofens (0) ein Gasverbraucher in Form eines mit einem Anschluss (15.1) für Sekundärluft versehenen Gasbrenners (12) anschliesst, der innerhalb oder ausserhalb des Ofens (0) angeordnet sein kann.

Zu einer verbesserten Nutzung besagter Brennstoffe und damit zur Erhöhung des thermischen Wirkungsgrades bei deren Umwandlung in ein Heizgas wird erfindungsgemäß eine Vorwärmung der innerhalb des Ofens (0) getrennt geführten Frischluftströme, nämlich sowohl der dem Vergasungsvorgang zuströmenden Primärluft als auch der Sekundärluft vorgesehen, welche letztere einem unmittelbar anschliessend an den Vergasungsvorgang noch im Ofen (0) einsetzenden Gasverbrennungsvorgang zuzuführen ist.

Ein Ofen (0) zur Durchführung des Verfahrens mit einem als ein düsenartiges Flammrohr (12) im Anschluss an die Brennkammer (1) im Ofenkörper vorgesehenen Gasbrenner ist durch je für den Primär-und den Sekundärluftstrom in der mehrschichtigen Wandung der Brennkammer (1) ausgebildete Hohlräume (14,15) jeweils mit einer zugeordneten Lufteintrittsöffnung (17,19) gekennzeichnet.

FIG 1

## Verfahren und Ofen zur Vergasung fester Brennstoffe und zur Verbrennung der gewonnenen Gase

Die Erfindung betrifft ein Verfahren zur Vergasung fester Brennstoffe wie Holz, Spanplatten, Sägemehl, Kohle, Briketts, Haushaltsabfälle usw. und zur anschliessenden Verbrennung der entstandenen Gase, bei dem ein Ofen als der Gaserzeuger zur Verwendung gelangt, der einen bewegbaren Feuerrost, im Oberteil seiner Brennkammer eine Zuführöffnung für den Brennstoff, ferner weitere Eintrittsöffnungen mindestens für die zum Vergasungsvorgang benötigte Primärluft mit zugeordneten Förder-und/oder Dosiervorrichungen für die Luftzufuhr aufweist, und an die Brennkammer des Ofens ein Gasverbraucher in Form eines mit einem Anschluss für Sekundärluft versehenen Gasbrenners anschliesst, der inner-oder auch ausserhalb des Ofens angeordnet sein kann.

Ein Verfahren geschilderter Art ist aus der US-PS 4,378,208 bekannt. Es wird hierbei durch Vergasung brennbarer Reste von Getreide und Feldfrüchten, einer sogenannten Biomasse, sowie durch Verbrennung eines dabei gewonnenen Primärgases die Erzeugung eines sauberen, heissen Sekundärgases zur Trocknung von Frischgetreide angestrebt. Eine Anwendung dieses Verfahrens auch für andere Zwecke wie beispielsweise Dampferzeugung ist ebenfalls möglich. Die für die Prozesse Vergasung und Gasverbrennung erforderliche Primär-bzw. Sekundärluft wird bei diesem Verfahren den genannten Prozessen direkt aus der Umgebung zugeführt. Die Sekundärluft soll sogar für eine gewisse Kühlung sorgen, damit die zulässige obere Temperaturgrenze für die Konstruktionsmaterialien des Gasverbrennungsraumes nicht überschritten wird. Besondere Massnahmen zur Eindämmung von Wärmeverlusten und damit zur Steigerung des thermischen Wirkungsgrades der Anlage sind besagtem Vorschlag nicht entnehmbar.

Der vorliegenden Erfindung liegt die Aufgabe zugrunde, ein Verfahren anzugeben, mit dessen Hilfe der thermische Wirkungsgrad bei der Vergasung fester Brennstoffe und der Verbrennung der dabei entstandenen Gase erhöht und die Menge der Restprodukte verringert werden können.

Die Aufgabe wird erfindungsgemäss durch die Massnahmen gemäss dem kennzeichnenden Teil des Patentanspruches 1 gelöst.

Durch Vorwärmung der Frischluft sowohl für den Vergasungsvorgang (Primärluft) als auch für den Gasverbrennungsvorgang (Sekundärluft) kann eine Abkühlung, wie sie bis anhin durch Kaltluftzufuhr herbeigeführt wurde, vermieden werden, sodass am Gasbrenner eine weit höhere Flammtemperatur als diejenige eines Oelbrenners erreichbar ist.

Massnahmen zu einer vorteilhaften weiteren Ausgestaltung des erfindungsgemässen Verfahrens sind Gegenstand der abhängigen Patentansprüche 2 bis 5.

Die Erfindung hat ferner auch einen Ofen zur Durchführung des Verfahrens nach den Ansprüchen 1 bis 5 zum Gegenstand.

Zwei Ofenanlagen der in der Frage stehenden Art sind der US-PS 4,378,208 entnehmbar. Der ersten Anlage wird der Brennstoff mittels einer in den Ofenoberteil hineinragenden Förderschnecke zugeführt. Das beim Vergasen entstehende Primärgas strömt über Oeffnungen in der Deckwand des Brennraumes des Ofens in eine Art aussen an der Deckwand angebauten Gasbrenners. Der Gasbrenner ist von einer Verbrennungskammer umgeben, die einen Abzug für das saubere, heisse sekundäre Trocknungsgas aufweist. An diesem Gasabzug ist ein Gebläse angeschlossen, das die Frischluft für die Vergasung und Gasverbrennung durch das System zieht. Der Eintritt für die Primärluft ist unterhalb des Feuerrostes des Ofens vorgesehen, während sich der Eintritt für die Sekundärluft in einer Seitenwand der den Gasbrenner aufnehmenden Verbrennungskammer befindet.

Bei der zweiten Ofenanlage nach der US-PS 4,378,208 sind die Räume für den Vergasungsvorgang und für die Gasverbrennung räumlich voneinander getrennt und über eine Leitung für das Primärgas miteinander verbunden. Entsprechend sind auch getrennte Einrichtungen zur Förderung bzw. Dosierung von Primär-bzw. Sekundärluft deren Eintrittsöffnungen zugeordnet.

Beiden Ausführsformen gemäss dem Vorschlag in der besagten Druckschrift haftet der gleiche Nachteil der durch die Zuführung kalter Frischluft entstehenden Wärmeverluste an, die den thermischen Gesamtwirkungsgrad der jeweiligen Anlage verschlechtern.

Ein weiterer gattungsgemässer Ofen ist auch aus den beiden Druckschriften DE-OS 31 30 813 und DE-OS 31 33 740 bekannt geworden. Hierin wird ein Ofen als Gaserzeuger zum Vergasen von Kohle, insbesondere Holzkohle, vorgeschlagen. Er soll kompakten, einfachen Aufbau aufweisen, betriebssicher sein und ein Gas mit hohem Heizwert und hoher Flammtemperatur liefern. Dies soll erreicht werden, indem ein von einem Ventil gesteuerter Lufteinlass an den Ofen unterhalb von dessen Feuerrost angeschlossen wird und die erzeugten Gase durch ein Abgasrohr am oberen Ende des Ofens abgezogen werden. Das Abgasrohr mündet in ein Zyklonfilter, aus dem die gereinigten Gase über eine weitere Rohrleitung einem Gasbrenner mit einem Anschluss für Sekundärluft zugeführt werden. Der Gasbrenner ist gleichzeitig auch als ein Oelbrenner ausgebildet und weist auch einen Anschluss für eine mit einem Dosierventil versehene Oelzuleitung sowie einen weiteren Anschluss für die Zuleitung der zum Verbrennen des Oels erforderlichen Luft auf, in welcher letzteren Zuleitung ebenfalls ein Dosierventil angeordnet ist. Im Zyklonfilter werden die vom Gas mitgerissenen, brennbaren Partikeln und die Asche abgeschieden und entweder am Boden eines Wasserbehälters abgeladen (DE-OS 31 30 813) oder mittels eines mit einem Pressluftanschluss versehenen Venturirohres durch den Feuerrost erneut dem Vergasungsvorgang im Ofen zugeführt (DE-OS 31 33 740). Die zweitgenannte Konstruktion ergibt zwar eine gewisse Erhöhung des Wirkungsgrades der Anlage, dennoch bleiben die Wärmeverluste, die durch Speisung der Prozesse Vergasung und Gasverbrennung mit kalter Frischluft sowie auch durch die lange Gasleitung zwischen Zyklonabscheider und Gasbrenner unvermeidlich entstehen, nicht eliminierbar.

Der Ofen zur Durchführung des erfindungsgemässen Verfahrens soll den Wirkungsgrad der bekannten Anlagen verbessern und neben kompaktem Aufbau, sicherer und einfacher Bedienbarbarkeit vor allem eine wirtschaftlichere Nutzung fester Brennstoffe zur Gewinnung von Heizgas mit einem denjenigen des Heizöls überragenden Heizwert ermöglichen.

Zur Lösung der Aufgabe wird ein gattungsgemässer Ofen mit den Merkmalen gemäss den Kennzeichen des Patentanspruches 6 vorgesehen.

Die durch die Hohlräume in der Brennkammerwandung strömenden Frischluftmassen werden bereits vor deren Eintritt in den jeweiligen Oxydationsvorgang angenähert auf die entsprechende Prozesstemperatur erhitzt, wobei die Strömung ohne die Mitwirkung einer kraftbetätigten Fördereinrichtung erfolgt. Im Hinblick auf den Sachverhalt, dass der Gasbrenner direkt an die Brennkammer anschliesst, sind Wärmeverluste bis zum Ofenausgang ausgeschlossen und höchstens im anschliessenden Wärmeverbraucher möglich.

Merkmale einer besonderes zweckmässigen Weiterausbildung des Erfindungsgegenstandes gehen aus den abhängigen Patentansprüchen 7 bis 27 hervor.

Die Erfindung wird beispielsweise anhand einer bevorzugten Ausführungsform geämss der Zeichnung näher erläutert.

Es zeigen:

Fig. 1 den Seitenriss eines Ofens nach der Erfindung im Schnitt mit einem im Anschluss daran angedeuteten Wärmeverbraucher;

Fig. 2 je einen Schnitt durch den Ofen gemäss der Fig. 1 längs der dort angedeuteten beiden Schnittebenen A-A und B-B, in denen in dieser Reihenfolge die Ausgestaltung von Hohlräumen für die Frischluftströme, nämlich die Primärluft und die Sekundärluft, in der Wandung der Brennkammer veranschaulicht ist;

Fig. 3 drei Ansichten eines Wärmetauschers zum Erhitzen der Sekundärluft in dem für diese vorgesehenen Hohlraum;

Fig. 4 den Verschlussdeckel der Zuführöffnung für den Brennstoff in geöffnetem Zustand und eine unterhalb des Verschlussdeckels angeordnete Flammschutzklappe in halbgeöffnetem Zustand in Auf-und Seitenriss;

Fig. 5 zwei Ansichten einer Sicherheitsschliessvorrichtung für zwei die Frischluftströme steuernde Drosselklappen;

Fig. 6 Auf-und Seitenriss des Feuerrostes mit Schüttelmechanismus, teilweise im Schnitt und

Fig. 7 die Ausbildung eines im Ofen vorgesehenen Gasbrenners in Form eines düsenartigen Flammrohres mit Sekundärluftzuführung in Seiten- und Hinteransicht.

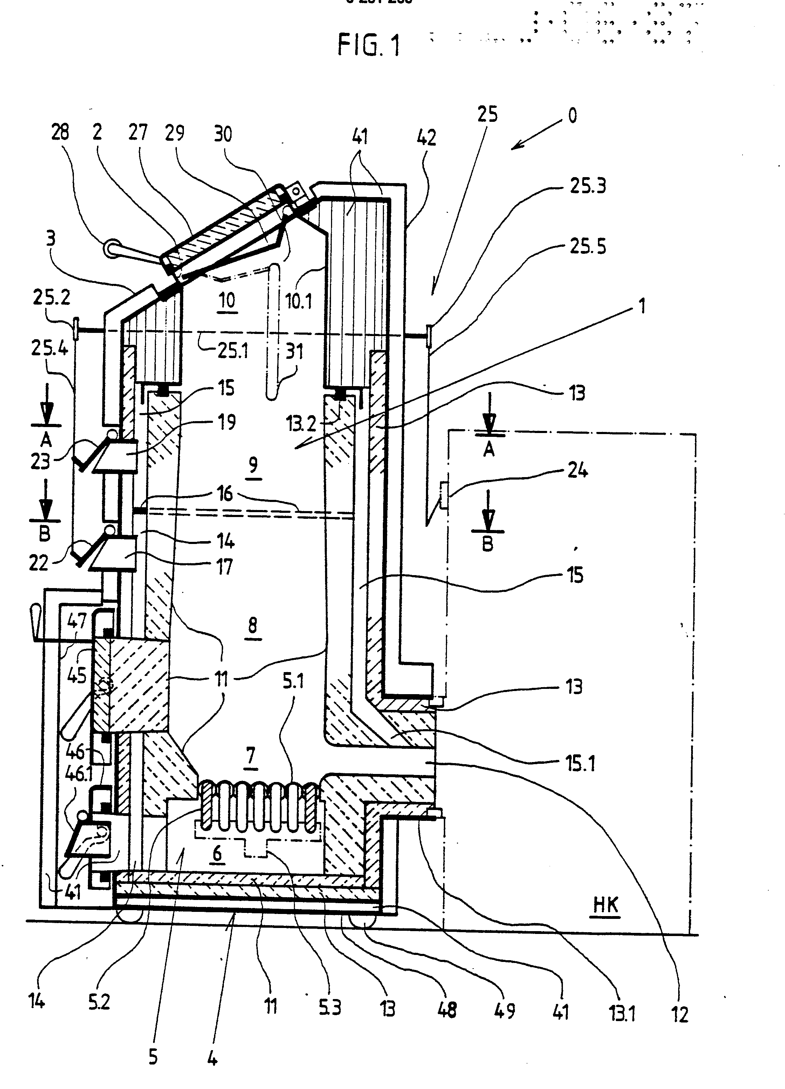

Die Brennkammer 1 des in der Figur 1 dargestellten Ofens O erstreckt sich senkrecht von einer Zuführöffnung 2 für den Brennstoff in einer schräg verlaufenden Deckplatte 3 des Ofens 0 bis zum Ofenboden 4. Ein Feuerrost 5 trennt einen über den Ofenboden 4 vorgesehenen Sammelraum 6 für die Asche von einer eigentlichen Verbrennungszone 7, in der die Zündung eines sich in einer darüber befindlichen Vergasungszone 8 entwickelnden Gases erfolgt. Ueber der Vergasungszone 8 erstreckt sich aufwärts eine Trocknungs-oder Vorratszone 9, die über einen Einfüllschacht 10 mit der Brennstoffzuführöffnung 2 in Verbindung steht. Die Wandung der Brennkammer 1 besteht etwa von der Trocknungszone 9 an abwärts bis und mit dem Ofenboden 4 aus einer feuerfesten Auskleidung 11. Die letztere setzt sich vorzugsweise aus einer Anzahl in speziellen Formen hergestellter, genau bearbeiteter und in der Zeichnung nicht speziell angedeuteter, feuerfester Betonziegel zusammen, die individuell mittels ebenfalls nicht gezeigter Senkkopfschrauben befestigt und einzelweise austauschbar sind. Dabei sind die Betonziegel derart geformt, dass die Brennkammer 1 wie insbesondere aus der Figur 1 ersichtlich in Richtung auf den Feuerrost 5 zu eine Querschnittserweiterung erfährt. Diese Massnahme ermöglicht die Vermeidung einer Verkeilung stückiger Brennstoffe bei deren Abwärtsbewegung vom Einfüllschacht 10 gegen die Verbrennungszone 7 im Betrieb. Der Brennkammerquerschnitt kann vieleckig oder kreisrund sein.

In der Figur 1 wird die Rückwand der Brennkammer 1 im Bereiche der Verbrennungszone 7 durch ein einen Gasbrenner bildendes Flammrohr 12 ebenfalls aus feuerfesten Betonziegeln durchdrungen. Um eine angestrebte Düsenwirkung zu erzeugen, ist das Flammrohr 12 mit einem in Richtung eines anschliessenden, in der Figur 1 mit strichpunktierten Linien angedeuteten Wärmeverbrauchers, beispielsweise eines Heizkessels HK, abnehmenden Querschnitt ausgebildet. Die Aussenfläche des Flammrohrs 12 ist in einer hülsenartigen und mit einem entsprechenden Blechmantel 13.1 bewehrten Wärmeisolierschicht 13 aus Keramikfaser eingefasst.

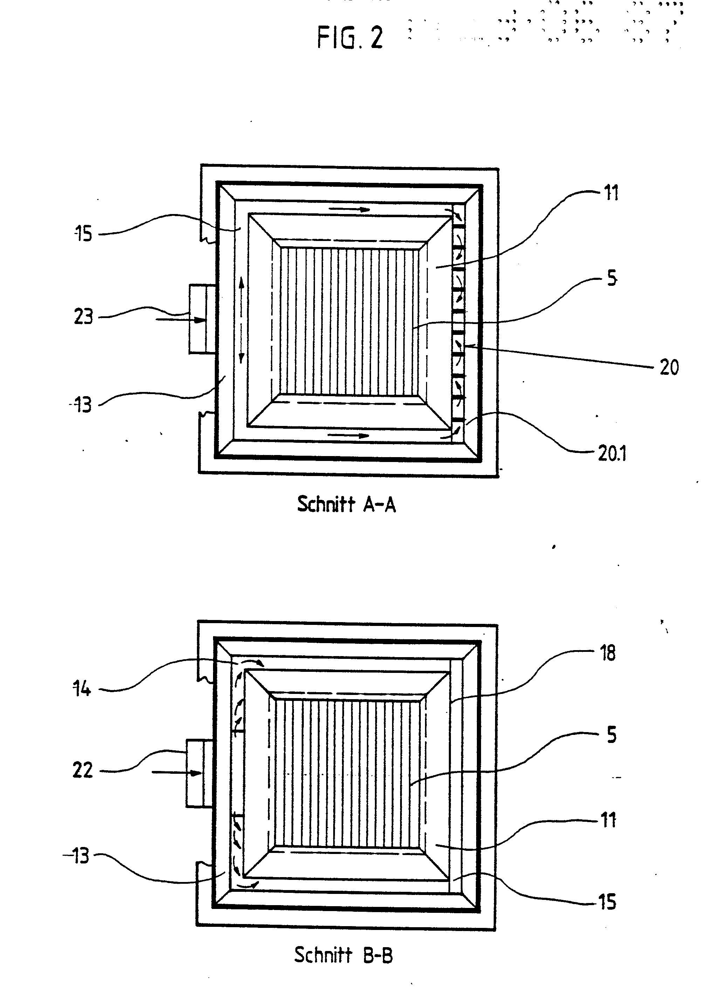

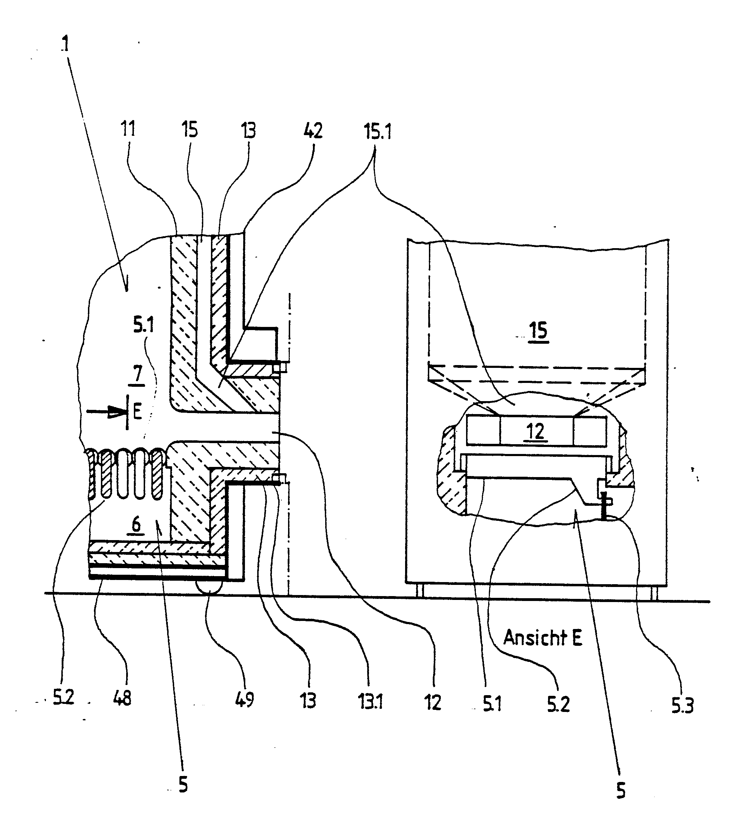

Zum Zwecke einer erfindungsgemäss nach Vorwärmung zu erfolgenden Zuführung von Frischluft, nämlich der für den Vergasungsvorgang benötigten Primärluft sowie der zur Gasverbrennung erforderlichen Sekundärluft, zu den im Ofen 0 ablaufenden Prozessen sind zwischen der feuerfesten Auskleidung 11 und einer diese in Abstand umgebende Wärmeisolierschicht 13 aus Keramikfaserplatten Hohlräume 14, 15 vorgesehen (vgl. Fig.1 und 2). Eine etwa auf halber Ofenhöhe angebrachte, horizontale Trennwand 16, die sich entlang der Betonziegel-Vorderfläche und entlang der beiden Betonziegel-Seitenflächen bis hin zur vertikalen Trennwand 18 erstreckt, grenzt in Vertikalrichtung die beiden Hohlräume 14, 15 gegeneinander ab. Der Hohlraum 14 für die Vorwärmung der Primärluft erstreckt sich in Vertikalrichtung von einer unterhalb der horizontalen Trennwand 16 zugeordneten Lufteintrittsöffnung 17 bis zum Sammelraum 6 für die Asche und in Horizontalrichtung von der Bedienungsseite des Ofens 0 in die seitlichen Bereiche der Brennkammerwandung bis zu einer diese abschliessenden, vertikalen Trennwand 18 an der Rückseite des Ofens 0 (vgl. Fig. 2, Schnitt B-B). Der Hohlraum 15 für die Vorwärmung der Sekundärluft bildet im oberhalb der horizontalen Trennwand 16 befindlichen Bereich der Brennkammerwandung einen viereckigen Ringraum, den ebenfalls eine Lufteintrittsöffnung 19 über derjenigen 17 für die Primärluft an der Bedienungsseite des Ofens 0 angeordnet ist. Der viereckige Ringraum erstreckt sich in den durch die vertikale Trennwand 18 verschlossenen, rückseitigen Bereich der Brennkammerwandung gegen das Flammrohr 12 hin, in das er über einen Kanalabschnitt 15.1, der die Form eines sich verjüngenden, flachen Hohlraumes aufweist, einmündet (vgl. auch Fig. 7).

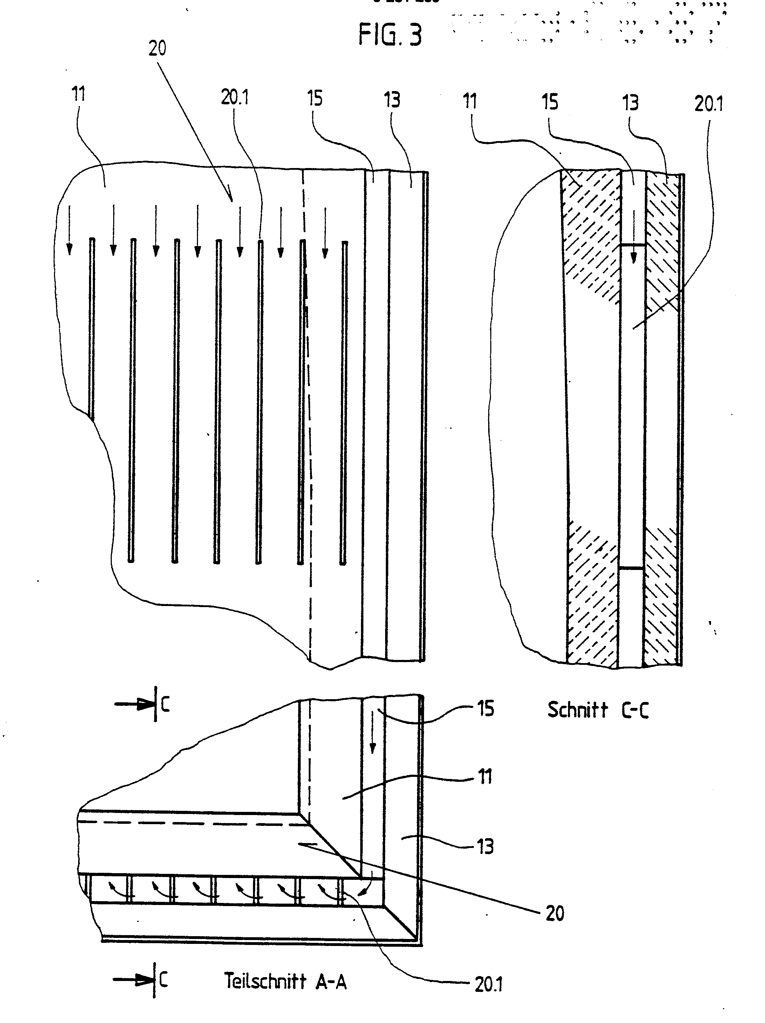

Wie aus der Figur 3 ersichtlich befindet sich im verschlossenen, rückseitigen Bereich der Brennkammerwandung ein im Strömungsweg der Sekundärluft liegender Wärmetauscher 20. Dieser ist aus flachen Stahllamellen 20.1 gebildet, die an der Aussenfläche der feuerfesten Auskleidung 11 der Brennkammer 1, in geringem gegenseitigen Abstand vertikal und parallel zueinander verlaufend, befestigt sind. Die zwischen den Stahllamellen 20.1 durchströmende Sekundärluft erfährt eine extrem starke Erhitzung, welcher Sachverhalt das Erreichen einer Flammtemperatur ermöglicht, die diejenige an einen Oelbrenner übersteigt. Die Abbildung oben links in der Figur 3 stellt eine Hinteransicht eines Teiles des Wärmetauschers 20 dar. Mit der Bezeichnung Teilschnitt A-A darunter wird ein entsprechender Ausschnitt aus der Schnittebene A-A gemäss den Figuren 1 und 2 aufgezeigt, während die rechtseitige Abbildung einen Schnitt in der Schnittebene C-C gemäss dem Teilschnitt A-A vor Augen führt.

Die beiden Lufteintrittsöffnungen 17, 19 weisen je eine Drosselklappe 22, 23 auf. Diese sind mit Hilfe eines Reglers 24, der die Temperatur eines Heizmediums im Heizkessel HK regelt, mechanisch steuerbar. Zu einer parallel zu tätigenden Steuerung der beiden Drosselklappen 22, 23 durch den Regler 24 ist ein Betätigungsmechanismus 25 zwischen denselben vorgesehen. Dieser besteht aus einer etwa auf der Höhe des Einfüllschachtes 10 aussen am Ofen 0 horizontal gelagerten Welle 25.1 je mit einem jeweils an einem von deren beiden Enden angeordneten Kettenrad 25.2, 25.3, wobei das eine Kettenrad 25.2 mittels einer ersten Kette 25.4 mit den beiden Drosselklappen 22, 23 und das andere Kettenrad 25.3 anhand einer zweiten Kette 25.5 mit dem Regler 24 verbunden ist. Die beschriebene Regeleinrichtung arbeitet mechanisch. Sie ist einfach und reagiert rasch auf Temperaturänderungen. Dadurch kann auf aufwendige und pannenanfällige elektrische oder elektronische Regeleinrichtungen verzichtet werden. Es wäre auch eine gleichzeitig getätigte Steuerung der Drosselklappen 22, 23 mit voneinander abweichenden zeitlichen Strömungsmengen denkbar.

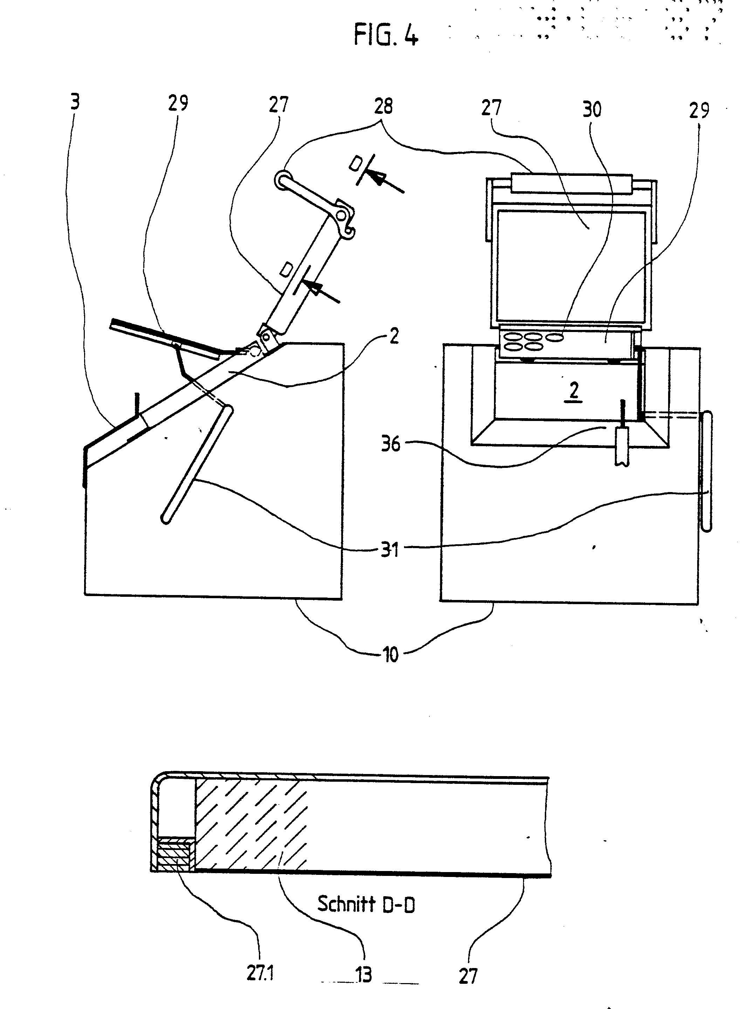

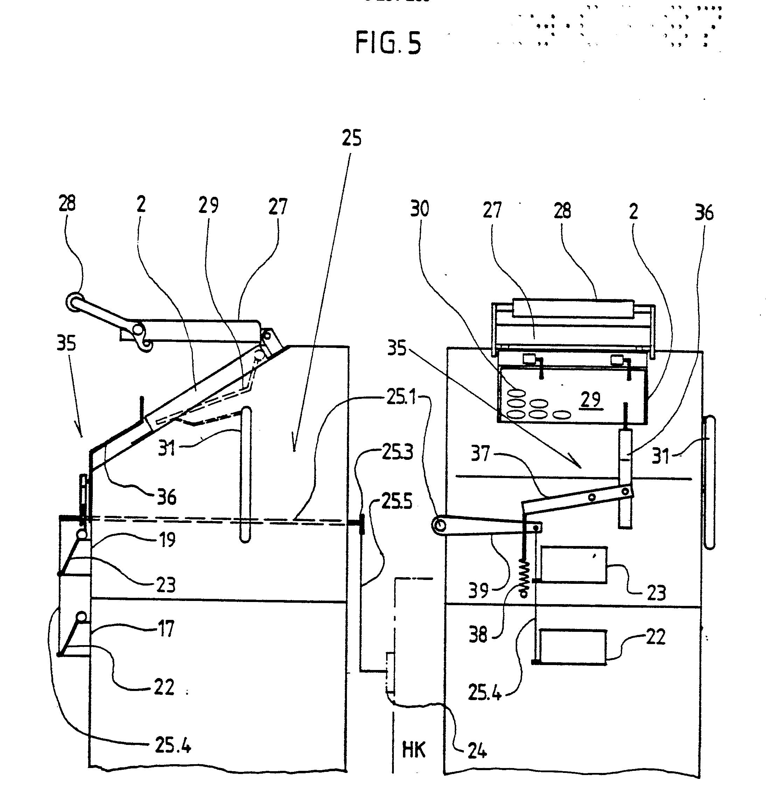

Die Zuführöffnung 2 für den Brennstoff am Einfüllschacht 10 der Brennkammer 1 ist mit einem zweihändig betätigbaren Verschlussdeckel 27 mit Sicherheitsbügel 28 versehen. Unterhalb des Verschlussdeckels 27 ist eine Flammschutzklappe 29 angeordnet. Sie weist Luftzuführöffnungen 30 auf und ist mittels eines ausserhalb des Ofens 0 vorgesehenen Hebels 31 auf-und zuschwenkbar. Wie man insbesondere dem Schnitt D-D in der gleichnamigen Schnittebene durch den Verschlussdeckel 27 in der Figur 4 entnehmen kann, ist der letztere mit einer Wärmeisolierschicht 13 aus Keramikfaser ausgekleidet und weist rundum eine Dichtungseinlage 27.1 aus dem gleichen Isoliermaterial auf. Es ist mit dem Bezugszeichen 36 in der rechtsseitigen Abbildung der Figur 4 ferner ein Betätigungsstössel eines bei der Erläuterung der Figur 5 noch im einzelnen zu beschreibenden Hebelmechanismus 35 bezeichnet. Besagter Betätigungsstössel 36 ist durch den Verschlussdeckel 27 steuerbar, indem dieser in seiner Schliessstellung auf den Betätigungsstössel 36 drückt. Der letztere ist einem Arm eines zweiarmigen Hebels 37 angelenkt und hält entgegen der Wirkung einer mit dem anderen Arm des Hebels 37 verbundenen Feder 38 den zweiarmigen Hebel im Uhrzeigersinn verschwenkt. Dabei wird ein an der Welle 25.1 des Betätigungsmechanismus 25 für die Steuerung der Drosselklappen 22, 23 befestigter weiterer Hebel 39, der hier anstelle eines Kettenrades mittels der zweiten Kette 25.4 die beiden Drosselklappen 22, 23 betätigt, von dem in der Offenstellung des Verschlussdeckels 27 unter der Zugkraft der Feder 38 auf ihn drückenden Arm des Hebels 37 entlastet, so dass die Wirkung des Reglers 24 auf die beiden Drosselklappen 22, 23 voll zur Geltung kommen kann (vgl. Fig. 5). Der geschilderte Hebelmechanismus 35 gemäss der Figur 5 fungiert als eine Sicherheitsschliessvorrichtung für die beiden Drosselklappen 22, 23, mit deren Hilfe verhindert werden soll, das beim Beladen des Ofens O mit Brennstoff durch die offene Zuführöffnung 2 die Flammen aus der Brennkammer 1 der Bedienungsperson entgegenschlagen.

Nach der Figur 1 weist der Einfüllschacht 10 der Brennkammer 1 einen Innenraum mit Rechteckquerschnitt und eine mehrschichtige Wandung auf. Die letztere besteht aus mehreren hitzefesten Wärmeisolierschichten 41 vorzugsweise aus Steinwolle, die zwischen einem einfachen inneren Blechmantel 10.1 und einem die Aussenhülle des Ofens O bildenden, doppelwandigen Blechmantel 42 eingefasst sind. Der Zwischenraum des doppelwandigen Blechmantels 42 ist mit demselben hitzbeständigen Wärmeisoliermaterial 41 wie die Wandung des Einfüllschachtes 10 ausgefüllt. Der Innenraum des letzteren kann auch mit einem kreisrunden Querschnitt ausgebildet sein.

Zum Zwecke eines Ausgleichs der unterschiedlichen Wärmeausdehnung von Einfüllschacht 10 und feuerfester Auskleidung 11 der Brennkammer 1 ist ein Dehnungsglied 13.2 aus Keramikfaser zwischen den besagten Teilen angeordnet.

Bei der in der Figur 1 veranschaulichten Ausführungsform des Ofens O gemäss der Erfindung ist das düsenartig ausgebildete Flammrohr 12 an der den Lufteintrittsöffnungen 17, 19 gegenüberliegenden Ofenseite, das heisst an der Ofenrückseite, vorgesehen, sodass die vertikale Symmetrieebene des Flammrohres 12 mit derjenigen der beiden Lufteintrittsöffnungen 17, 19 zusammenfällt. Es ist jedoch auch eine Anordnung des Flammrohres 12 in einer anderen, in Bezug auf die vertikale Symmetrieebene der beiden Lufteintrittsöffnungen 17, 19 um einen beliebigen Winkel, vorzugsweise jedoch um 90 Grad, verdrehten Lage sehr wohl möglich. Somit kann der erfindungsgemässe Ofen O jeweils den örtlichen Gegebenheiten angepasst werden.

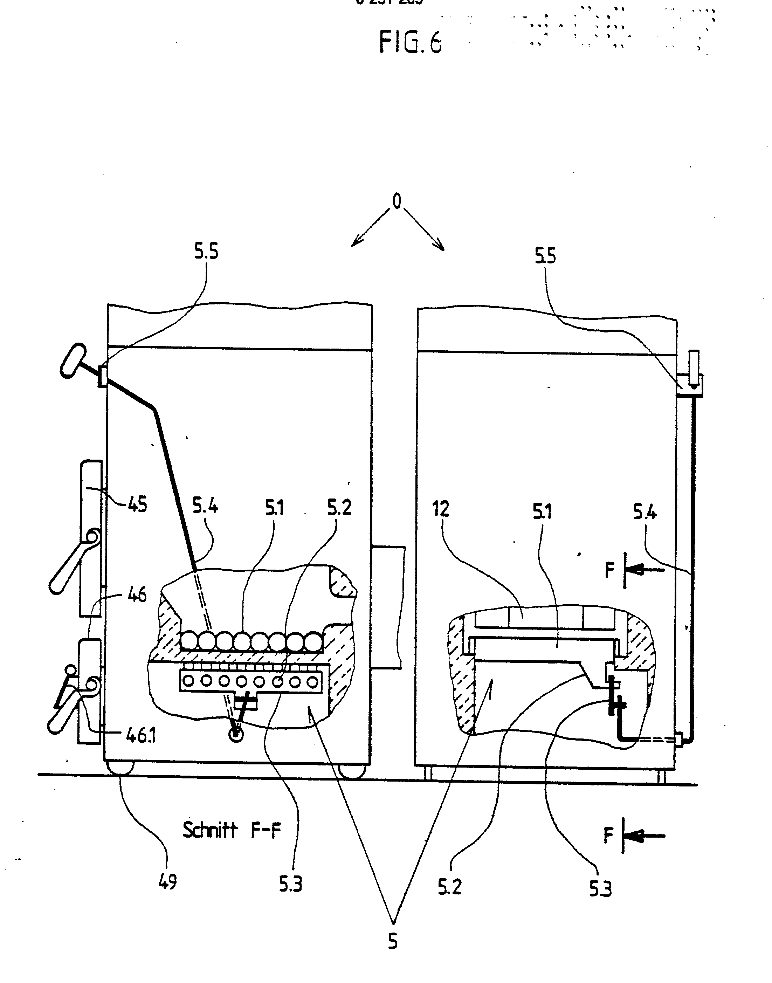

Der Feuerrost 5 setzt sich wie gleichfalls der Figur 1 entnehmbar aus einer Anzahl von um ihre Längsachsen schwenkbar in der feuerfesten Auskleidung 11 zwischen Verbrennungszone 7 und Sammelraum 6 für die Asche gelagerten, individuell bewegbaren Stahlstäben 5.1 zusammen. Die Stahlstäbe 5.1 sind je mit einem Dreharm 5.2 ausgebildet. Sämtliche Dreharme 5.2 stehen mit Hilfe einer Lasche 5.3 miteinander und die Lasche 5.3 mit einem ausserhalb des Ofenkörpers angebrachten Betätigungshebel 5.4 in formschlüssiger Antriebsverbindung. Anhand des beschriebenen Mechanismus ist ein kräftiges Schütteln des Feuerrostes 5 und damit ein angenähert restloses Entfernen der Asche aus der Verbrennungszone 7 erreichbar, wobei sich der Betätigungshebel 5.4 in einer an der Aussenfläche des Ofens O befestigten Führung 5.5 bewegt (vgl. auch Fig. 6 und 7).

Es sind an der Bedienungsseite des Ofens O in geringem Abstand über dem Niveau des Feuerrostes 5 eine sich in die Brennkammer 1 öffnende, gasdicht schliessbare Reinigungstür 45 mit inwendiger, feuerfester Auskleidung 11 gleich wie die Wandung der Brennkammer 1 und unmittelbar unter dem Niveau des Feuerrostes 5 eine zum Sammelraum 6 für die Asche führende, ebenfalls gasdicht schliessbare Aschentür 46 mit hitzebeständiger Wärmeisolation 41 aus Steinwolle an deren Innenseite sowie mit einer eingebauten Explosionsschutzklappe 46.1 angeordnet. Reinigungs-und Aschentür 45 und 46 sind zusammen mit dem Verschlussdeckel 27 der Zuführöffnung 2 für den Brennstoff mittels in der Zeichnung nicht dargestellter Hebel derart den zugehörigen Rahmen angelenkt, dass sie durch Zweihandbedienung genau in diese Rahmen einpassbar sind. Zu einem gasdichten Verschliessen der zugeordneten Oeffnungen sind ferner die Ränder von Verschlussdeckel 27 sowie Reinigungs-und Aschentür 45 und 46 zusammen mit dem inwendig angebrachten Auskleidungs-bzw. Isoliermaterial jeweils nach Art eines Pyramidenstumpfes ausgebildet.

Zur Verhinderung einer unbeabsichtigten Berührung von Reinigungs-und Aschentür 45 und 46 und damit einer Verletzung von Personen durch Verbrennung sind die genannten Türen durch eine Wärmedämmtür 47 mit inwendiger Wärmeisolation 41 aus Steinwolle überdeckt.

Der Ofenboden 4 weist unterhalb der feuerfesten Auskleidung 11, die seine den Sammelraum 6 für die Asche zugewandte, oberste Schicht bildet, noch eine Wärmeisolierschicht 13 aus Keramikfaser und darunter eine doppelwandige, blecherne Grundplatte 48 auf, deren Zwischenraum ähnlich wie diejenige des äusseren Blechmantels 42 des Ofens O mit Wärmeisoliermaterial 41 aus Steinwolle ausgefüllt ist. An der Grundplatte 41 sind auch vier Laufrollen 49 mittels nicht gezeigter Wälzlager gelagert. Ausserdem befindet sich eine in der Zeichnung nicht sichtbare Kupplungseinrichtung jeweils unterhalb des Blechmantels 13.1 des Flammrohres 12 an der den jeweiligen Wärmeverbraucher zugewandten Seite des Ofens 0. Mit Hilfe von Kupplung und Rollen 49 ist ein rasches Anschliessen bzw. Trennen des Ofens 0 an einen bzw. von einem Wärmeverbraucher wie der Heizkessel HK gemäss der Figur 1 durchführbar.

Der erfindungsgemässe Ofen 0 allein weist einen Wirkungsgrad von ca. 90 % auf, während sich zusammen mit einem speziell zum Ofen O konstruierten Heizkessel HK ein gesamter thermischer Wirkungsgrad zwischen 80 und 90 % erreichen lässt.

## Ansprüche

1. Verfahren zur Vergasung fester Brennstoffe wie Holz, Spanplatten, Sägemehl, Kohle, Briketts, Haushaltsabfälle usw. und zur anschliessenden Verbrennung der entstandenen Gase, bei dem ein Ofen (0) als der Gaserzeuger zur Verwendung gelangt, der einen bewegbaren Feuerrost (5), im Oberteil (10) seiner Brennkammer (1) eine Zuführöffnung (2) für den Brennstoff, ferner weitere Eintrittsöffnungen (17,19) mindestens für die zum Vergasungsvorgang benötigte Primärluft mit zugeordneten Förder-und / oder Dosiervorrichtungen (22,23) für die Luftzufuhr aufweist, und an die Brennkammer (1) des Ofens (0) ein Gasverbraucher in Form eines mit einem Anschluss (15.1) für Sekundärluft versehenen Gasbrenners (12) anschliesst, der innen-oder auch ausserhalb des Ofens (0) angeordnet sein kann, dadurch gekennzeichnet, dass die innerhalb des Ofens (0) getrennt geführten zwei Frischluftströme, nämlich sowohl die dem Vergasungsvorgang zuströmende Primärluft als auch die Sekundärluft, die einem unmittelbar anschliessend an den Vergasungsvorgang noch im Ofen (0) einsetzenden Gasverbrennungsvorgang zuzuführen ist, vorgewärmt werden.

2. Verfahren nach dem Anspruch 1, dadurch gekennzeichnet, dass die Vorwärmung beider Frischluftströme im wesentlichen durch den Vergasungsprozess erfolgt.

3. Verfahren nach Anspruch 1 oder 2, gekennzeichnet durch eine unterschiedliche Vorwärmung von Primär-und Sekundärluft, wobei die letztere stärker vorgewärmt wird.

4. Verfahren nach einem der Ansprüche 1 bis 3, gekennzeichnet durch eine parallel getätigte Steuerung der zeitlichen Strömungsmenge beider Frischluftströme in Abhängigkeit der Temperatur eines aufzuheizenden Mediums.

5. Verfahren nach einem der Ansprüche 1 bis 4, gekennzeichnet durch unterschiedliche zeitliche Strömungsmengen beider Frischluftströme.

6. Ofen zur Durchführung des Verfahrens nach einem der Ansprüche 1 bis 5, gekennzeichnet durch je für den Primär-und den Sekundärluftstrom in der mehrschichtigen Wandung der Brennkammer (1) ausgebildete Hohlräume (14, 15) jeweils mit einer zugeordneten Lufteintrittsöffnung (17, 19).

7. Ofen nach dem Anspruch 6, dadurch gekennzeichnet, dass die Hohlräume (14,15) für die beiden Frischluftströme zwischen einer die Brennkammer (1) unmittelbar umgrenzenden, feuerfesten Auskleidung (11) und einer die Auskleidung (11) im Abstand umgebenden Wärmeisolierschicht (13) vorgesehen sind und die beiden Hohlräume (14,15) durch eine etwa auf halber Ofenhöhe angeordnet, horizontale Trennwand (16) voneinander getrennt sind.

8. Ofen nach Anspruch 6 oder 7, dadurch gekennzeichnet, dass sich der Hohlraum (14) für die Vorwärmung der Primärluft in Vertikalrichtung von der unterhalb der horizontalen Trennwand (16) zugeordneten Lufteintrittsöffnung (17) bis zu einem Sammelraum (6) für die Asche unter dem Feuerrost (5) und in Horizontalrichtung von der Bedienungsseite des Ofens (0) in die seitlichen Bereiche der Brennkammerwandung bis zu einer diese abschliessenden, vertikalen Trennwand (18) an der Ofenrückseite erstreckt und der Hohlraum (15) für die Vorwärmung der Sekundärluft im oberhalb der horizontalen Trennwand (16) befindlichen Bereich der Brennkammerwandung einen viereckigen Ringraum bildet, wobei die zugehörige Lufteintrittsöffnung (19) ebenfalls auf der Bedienungsseite des Ofens (0) über der Lufteintrittsöffnung (17) für die Primärluft angeordnet ist und der viereckige Ringraum über einen die Form eines sich verjüngenden, flachen Hohlraumes aufweisenden Kanal (15.1) mit einem als ein die Brennkammerwandung durchdringendes Flammrohr (12) ausgestalteten Gasbrenner in Strömungsverbindung steht.

9. Ofen nach einem der Ansprüche 6 bis 8, dadurch gekennzeichnet, dass die beiden Lufteintrittöffnungen (17,19) je für die Primär-und die Sekundärluft jeweils eine Drosselklappe (22,23) aufweisen.

10. Ofen nach dem Anspruch 9, dadurch gekennzeichnet, dass die beiden Drosselklappen (22,23) durch einen Regler (24) mechanisch steuerbar sind, der die Temperatur eines Wärmeverbrauchers (HK) regelt.

11. Ofen nach dem Anspruch 10, gekennzeichnet durch einen Betätigungsmechanismus (25) zu einer parallel erfolgenden Steuerung der beiden Drosselklappen (22,23) durch den Regler (24), bestehend aus einer etwa auf der Höhe eines Einfüllschachtes (10) aussen am Ofen (0) horizontal gelagerten Welle (25.1) je mit einem jeweils an einem von deren beiden Enden angeordneten Kettenrad (25.2,25.3), von denen das eine mittels einer ersten Kette (25.4) mit den beiden Drosselklappen (22,23) und das andere anhand einer zweiten Kette (25.5) mit dem Regler (24) verbunden ist.

12. Ofen nach einem der Ansprüche 6 bis 11, gekennzeichnet durch einen Wärmetauscher (20) in dem Abschnitt des die Gestalt eines viereckigen Ringraums aufweisenden Hohlraumes (15) für die Vorwärmung der Sekundärluft, der in den verschlossenen rückseitigen Bereich der Brennkammerwandung liegt.

13. Ofen nach dem Anspruch 12, dadurch gekennzeichnet, dass der Wärmetauscher (20) durch flache Stahllamellen (20.1) gebildet ist, die an der Aussenfläche der feuerfesten Auskleidung (11) der Brennkammer (1), in geringem gegenseitigem Abstand vertikal und parallel zueinander verlaufend, befestigt sind.

14. Ofen nach einem der Ansprüche 6 bis 13, dadurch gekennzeichnet, dass die feuerfeste Auskleidung (11) der Brennkammer (1) in der Gestalt eines sich nach unten erweiternden Pyramidenstumpfes oder Kegelstumpfes ausgebildet ist.

15. Ofen nach einem der Ansprüche 6 bis 14, dadurch gekennzeichnet, dass die Zuführöffnung (2) für den Brennstoff am Einfüllschacht (10) der Brennkammer (1) mit einem zweihändig betätigbaren Verschlussdeckel (27) nebst einem Sicherungsbügel (28) versehen ist.

16. Ofen nach dem Anspruch 15, gekennzeichnet durch eine unterhalb des Verschlussdeckels (27) angeordnete, mittels eines ausserhalb des Ofens (0) vorgesehenen Hebels (31) betätigbare Flammschutzklappe (29), in der Luftzuführöffnungen (30) ausgebildet sind.

17. Ofen nach Anspruch 15 oder 16, gekennzeichnet durch einen vom Verschlussdeckel (27) betätigbaren Hebelmechanismus (35), der zum Schliessen der beiden Drosselklappen (22,23) gleichzeitig mit dem Oeffnen des Verschlussdeckels (27) mit dem Betätigungsmechanismus (25) für die Parallelsteuerung der beiden Drosselklappen (22,23) in Wirkverbindung steht.

18. Ofen nach einem der Ansprüche 6 bis 17, dadurch gekennzeichnet, dass der Einfüllschacht (10) der Brennkammer (1) einen Innenraum rechteckigen Querschnittes sowie eine mehrschichtige Wandung aus hitzebeständigem Wärmeisoliermaterial (41) aufweist, das zwischen einem einfachen inneren Blechmantel (10.1) sowie einem die Aussenhülle des Ofens (0) bildenden, doppelwandigen Blechmantel (42) eingefasst und der Zwischenraum des letzteren mit demselben Wärmeisoliermaterial (41) ausgefüllt ist, und dass zum Zwecke eines Ausgleichs der unterschiedlichen Wärmeausdehnung von Einfüllschacht (10) und feuerfester Auskleidung (11) der Brennkammer (1) zwischen diesen ein Dehnungsglied (13.2) angeordnet ist.

19. Ofen nach einem der Ansprüche 6 bis 18, dadurch gekennzeichnet, dass die feuerfeste Auskleidung (11) der Brennkammer (1) aus Betonziegeln besteht, die mit Senkkopfschrauben befestigt und einzelweise ersetzbar sind.

20. Ofen nach einem der Ansprüche 6 bis 19, dadurch gekennzeichnet, daß das düsenartig ausgebildete Flammrohr (12) an der den Lufteintrittsöffnungen (17,19) gegenüberliegenden Ofenseite vorgesehen ist, so dass die vertikale Symmetrieebene des Flammrohres (12) mit der gemeinsamen vertikalen Synnetrieebene der beiden Lufteintrittsöffnungen (17,19) zusammenfällt.

21. Ofen nach einem der Ansprüche 6 bis 19, dadurch gekennzeichnet, daß das Flammrohr (12) in einer in bezug auf die vertikale Symmetrieebene der beiden Lufteintrittsöffnungen (17,19) um 90 Grad verdrehten Lage angeordnet ist.

22. Ofen nach einem der Ansprüche 6 bis 21, gekennzeichnet durch einen Feuerrost (5), der aus um ihre Längsachsen schwenkbar gelagerten, individuellen Stahlstäben (5.1) besteht und mit einem Schüttelmechanismus (5.2,5.3,5.4,5.5) mit ausserhalb des Ofens (0) angeordnetem Betätigungshebel (5.4) ausgerüstet ist.

23. Ofen nach einem der Ansprüche 6 bis 22, dadurch gekennzeichnet, dass an der Bedienungsseite des Ofens (0) in geringem Abstand über dem Niveau des Feuerrostes (5) eine sich in die Brennkammer (1) öffnende, gasdicht schliessbare Reinigungstür (45) mit feuerfester inwendiger Auskleidung (11) und unmittelbar unter dem Niveau des Feuerrostes (5) eine zum Sammelraum (6) für die Asche führende, ebenfalls gasdichte Aschentür (46) mit hitzebeständiger Isolation (41) an deren Innenseite und eingebauter Explosionsschutzklappe (46.1) vorgesehen sind.

24. Ofen nach einem der Ansprüche 6 bis 23, dadurch gekennzeichnet, dass der Verschlussdeckel (27) der Zuführöffnung (2) für den Brennstoff, die Reinigungstür (45) der Brennkammer (1) und die Aschentür (46) des Sammelraumes (6) für die Asche mittels Hebel derart den zugehörigen Rahmen angelenkt sind, dass sie durch Zweihandbedienung genau in diese Rahmen einpassbar sind, und zu einem gasdichten Verschliessen der zugeordneten Oeffnungen die Ränder von Verschlussdeckel (27) sowie Reinigungs-und Aschentür (45,46) zusammen mit dem inwendig angebrachten Auskleidungs-bzw. Isoliermaterial 11 bzw. 41 nach Art eines Pyamidenstumpfes ausgebildet sind.

25. Ofen nach einem der Ansprüche 6 bis 24, gekennzeichnet durch eine die Reinigungstür (45) und die Aschentür (46) überdeckende Wärmedämmtür (47) mit Wärmeisolation (41).

26. Ofen nach einem der Ansprüche 6 bis 25, dadurch gekennzeichnet, dass die feuerfeste Auskleidung (11) jeweils aus Feuerbeton, die Wärmeisolierschicht (13) um die Hohlräume (14,15) für die Frischluftströme aus Keramikfaserplatten und die Wärmeisolation (41) des Einfüllschachtes (10) und des doppelwandigen, blechernen, äusseren Ofenmantels (42) aus Steinwolle besteht.

27. Ofen nach einem der Ansprüche 6 bis 26, gekennzeichnet durch mindestens vier Rollen (49), die zur Erleichterung einer Trennung des Ofens (0) von einem Wärmeverbraucher (HK) zwecks Durchführung von Wartung-und Reparaturarbeiten am Ofen (0) an dessen Grundplatte (48) angeordnet sind.

FIG. 1

# FIG. 2

Schnitt A-A

Schnitt B-B

## FIG. 3

Schnitt C-C

Teilschnitt A-A

0 251 269

FIG. 4

Schnitt D-D

# FIG. 5

# FIG.6

Schnitt F-F

# FIG.7

Ansicht E